# EUROPÄISCHE PATENTSCHRIFT

(11) **EP 2 577 825 B1**
(45) Veröffentlichungstag und Bekanntmachung des Hinweises auf die Patenterteilung: **08.07.2015**
(21) Anmeldenummer: 11722013.7
(22) Anmeldetag: 27.05.2011
(51) Int. Cl.: H01T 13/32, H01T 13/54

(54) **VORKAMMERZÜNDKERZE**
PRECHAMBER SPARKPLUG
BOUGIE D'ALLUMAGE À PRÉCHAMBRE

(30) Priorität: 02.06.2010 DE 102010022564
(43) Veröffentlichungstag der Anmeldung: 10.04.2013
(73) Patentinhaber: MTU Friedrichshafen GmbH, 88045 Friedrichshafen (DE)
(72) Erfinder: ERNST, Anko, 88682 Salem (DE)
(74) Vertreter: Winter, Josef
(86) Internationale Anmeldenummer: PCT/EP2011/002620
(87) Internationale Veröffentlichungsnummer: WO 2011/151035

(56) Entgegenhaltungen:
- DE-A1- 10 144 976
- FR-A- 768 447
- US-A- 1 596 240
- US-A- 2 047 575

## Beschreibung

Die Erfindung betrifft eine Vorkammerzündkerze nach dem Oberbegriff von Anspruch 1.

Eine Vorkammerzündkerze besteht unter anderem aus einer zentrischen Mittenelektrode und mindestens einer Massenelektrode, welche mit Abstand zur Mittenelektrode unter Bildung einer Funkenstrecke angeordnet ist. Die Mitten- und die Massenelektrode sind innerhalb einer Vorkammerkappe angeordnet. Durch eine oder mehrere Übertrittsbohruhgen in der Vorkammerkappe strömt das komprimierte Gas-Lüftgemisch in die Vorkammer. Nach Zündung dieses Gemischs breitet sich dann die Flammfront aus der Vorkammer durch diese Übertrittsbohrungen in den Hauptbrennraum aus.

So zeigt beispielsweise die DE 101 44 976 A1 in einer ersten Ausführungsform eine Vorkammerzündkerze mit einer ringförmigen Massenelektrode, welche über Halter an der Vorkammerkappe befestigt ist. In Längsrichtung der Vorkammerzündkerze hat die Massenelektrode eine innere und eine äußere Umfangsfläche. Die innere Umfangsfläche ist der Mittenelektrode zugewandt. Die äußere Umfangsfläche ist auf der Seite der Massenelektrode, welcher der Mittenelektrode abgewandt ist, angeordnet. In einer zweiten Ausführungsform sind mehrere Massenelektroden sternförmig zur Mittenelektrode ausgerichtet. In beiden Ausführungsformen sind die Mitten- und die Massenelektrode von außen her nicht zugänglich. Damit sind aber das Abbrandvolumen und die Lebensdauer der Vorkammerzündkerze vorgegeben. Das Abbrandvolumen ergibt sich aus dem minimalen Abstand der Massen- zur Mittenelektrode im Neuzuständ der Vorkammerzündkerze sowie dem maximalen Abstand und der Form der Massenelektrode. Zudem lässt sich die ringförmige Massenelektrode -selbst bei gegebener Zugänglichkeit der Vorkammer- nicht nachstellen. Die Lebensdauer einer derartige Vorkammerzündkerze liegt typischerweise bei etwa 2000 Betriebsstunden, so dass hier Optimierungspotenzial gegeben ist. Eine Vorkammerzündkerze, gemäß Oberbegriff des Anspruchs 1, ist aus US-A-1.596240 bekannt.

Der Erfindung liegt daher die Aufgabe zugrunde, die Lebensdauer einer Vorkammerzündkerze weiter zu erhöhen.

Gelöst wird diese Aufgabe durch eine Vorkammerzündkerze mit den Merkmalen von Anspruch 1 und einem entsprechend angepassten Herstellungsverfahren mit den Merkmalen von Anspruch 4 oder Anspruch 5.

Bei der Vorkammerzündkerze nach der Erfindung zeigt die innere Umfangsfläche der Massenelektrode einen konkaven Verlauf, während die äußere Umfangsfläche einen konvexen Verlauf zeigt. Zusätzlich steht die innere Umfangsfläche unter Zugspannung und die äußere Umfangsfläche unter Druckspannung. Erzeugt werden diese Spannungen, indem beim Herstellungsverfahren die Massenelektrode in den Halter eingesetzt wird und auf der inneren Umfangsfläche sowie auf der äußeren Umfangsflächen mit dem Halter verpresst, also gezielt plastisch deformiert, wird. Alternativ hierzu können die Zug- und Druckspannungen erzeugt werden, indem die Massenelektrode mit dem Halter mittels Kehlnaht verschweißt wird. Während des Betriebs der Vorkammerzündkerze verringert sich die Stärke der Massenelektrode aufgrund des Abbrands. Wird eine kritische Stärke der Massenelektrode unterschritten, so bewirken die Zug- und die Druckspannung, dass die Massenelektrode in den Ausgangzustand vor der plastischen Verformung sich zurückstellt. Über die Zug- und Druckspannung wird demnach ein erster Kompensationseffekt erzielt, welcher darin besteht, dass bei sich vergrößerndem Abstand von Massen- und Mittenelektrode die Massenelektrode selbstständig zurückstellt und dadurch der Abstand zur Mittelelektrode wieder verkleinert wird. Der erste Kompensationseffekt endet, wenn die einander zugewandten Umfangsflächen der Mittel- und Massenelektrode parallel zueinander verlaufen. Bei Prüfstandsversuchen wurde festgestellt, dass der erste Kompensationseffekt nach etwa 4000 Betriebsstunden auftritt. Von Vorteil ist eine verbesserte Konstanz in der Funkenbildung aufgrund des konstant gehaltenen Elektrodenabstands. Hieraus resultiert wiederum eine konstantere Verbrennung während der Betriebsdauer der Vorkammerzündkerze.

Eine Ausgestaltung der Erfindung sieht vor, dass die Übertrittsbohrung bzw. die Übertrittsbohrungen in der Art angeordnet ist/sind, dass das komprimierte Gas-Luftgemisch (Mittel-Jet) die Funkenstrecke zwischen Mittenelektrode und

Massenelektrode durchströmt. In Verbindung mit der Dimensionierung von Massenelektrode und Halter wird eine verhältnismäßig starken Aufheizung der Massenelektrode auf der inneren Umfangsfläche bei gleichzeitig guter Wärmeableitung auf der äußeren Umfangsfläche über die Halter erreicht. Der Temperaturunterschied von äußerer und innerer Umfangsfläche bewirkt wiederum, dass sich die Form der Massenelektrode verändert. Jetzt zeigt die innere Umfangsfläche einen konvexen Verlauf, während die äußere Umfangsfläche einen konkaven Verlauf zeigt. Durch die Anordnung der Übertrittsbohrungen wird in Verbindung mit der geeigneten Dimensionierung von Massenelektrode und Halter ein zweiter Kompensationseffekt erzielt. Dieser besteht darin, dass nach längerer Laufzeit der Vorkammerzündkerze sich der Abstand von Mittenzu Massenelektrode trotz Abbrands nicht vergrößert.

Bei der Erfindung sind das einfachen Herstellungsverfahren und eine deutlich verlängerte Laufzeit von Vorteil. Die beiden Kompensationseffekte wiederum bieten den Vorteil eines konstanteren Zündzeitpunkts über die gesamt Laufzeit der Vorkammerzündkerze.

In den Figuren sind die bevorzugten Ausführungsbeispiele dargestellt. Es zeigen:
- Figur 1: eine Vorkammerzündkerze mit ringförmiger Massenelektrode,
- Figur 2: eine Vorkammerzündkerze mit einzelnen Massenelektroden,
- Figur 3: einen Ausschnitt der Figur 1 im Ausgangszustand,
- Figur 4: den Ausschnitt nach einer ersten Betriebszeit,
- Figur 5: den Ausschnitt nach einer zweiten Betriebszeit und
- Figur 6: den Ausschnitt nach einer dritten Betriebszeit.

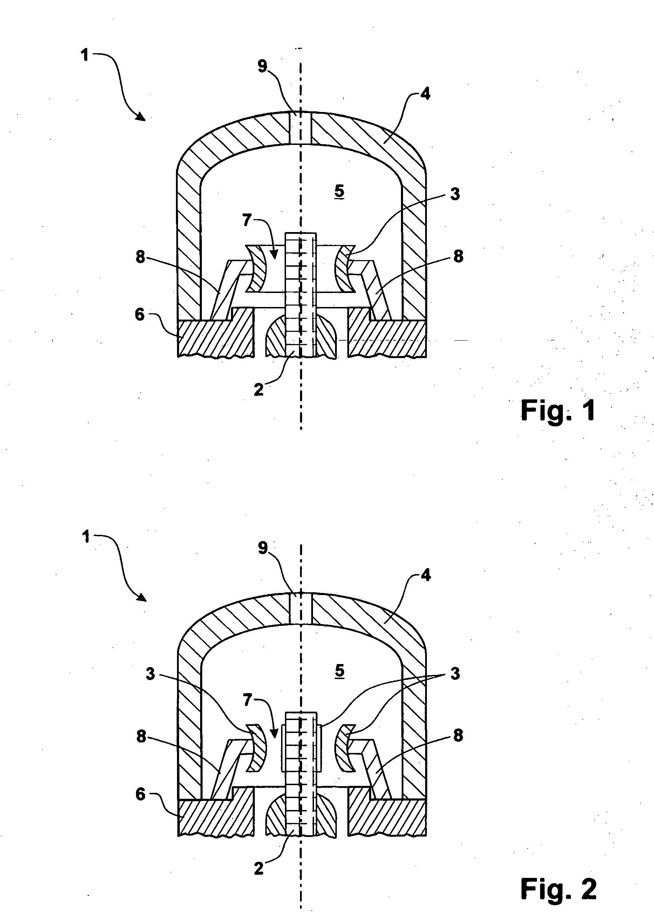

Die Figur 1 zeigt die Vorkammerzündkerze 1 mit ringförmiger Massenelektrode 3 im Bereich der Vorkammer 5 als Schnittbild. Der allgemeine Aufbau und die allgemeine Funktion einer Vorkammerzündkerze werden als bekannt angenommen. Im Bereich der Vorkammer 5 besteht die Vorkammerzündkerze 1 aus einer zentrischen Mittenelektrode 2, der ringförmigen Massenelektrode 3, einer Vorkammerkappe 4, welche die Vorkammer 5 bildet, und einem Gehäuse 6. Die Mittenelektrode 2 ist gegen das Gehäuse 6 elektrisch isoliert. Die Vorkammerkappe 4 ist mit dem Gehäuse 6 der Vorkammerzündkerze 1 verbunden. In der Vorkammerkappe 4 ist zumindest eine Übertrittsbohrung 9 vorhanden, über welche das Gas-Luftgemisch in die Vorkammer 5 gelangt und nach dessen Zündung sich die Flammfront in den Hauptbrennraum ausbreitet. Die Mittenelektrode 2 und die Massenelektrode 3 sind von außen her unzugänglich innerhalb der Vorkammer 5 angeordnet. Die Massenelektrode 3 umgibt mit Abstand -unter Bildung einer Funkenstrecke 7- die Mittenelektrode 2. Über Halter 8 ist die Massenelektrode 3 am Gehäuse 6 befestigt.

Die Figur 2 zeigt ein Vorkammerzündkerze 1 mit einzelnen Massenelektroden 3. In der Figur 2 sind drei Massenelektroden 3 ersichtlich, welche sternförmig zur Mittenelektrode 2 ausgerichtet sind. Jede Massenelektrode 3 ist über einen Halter 8 am Gehäuse 6 der Vorkammerzündkerze 1 befestigt.

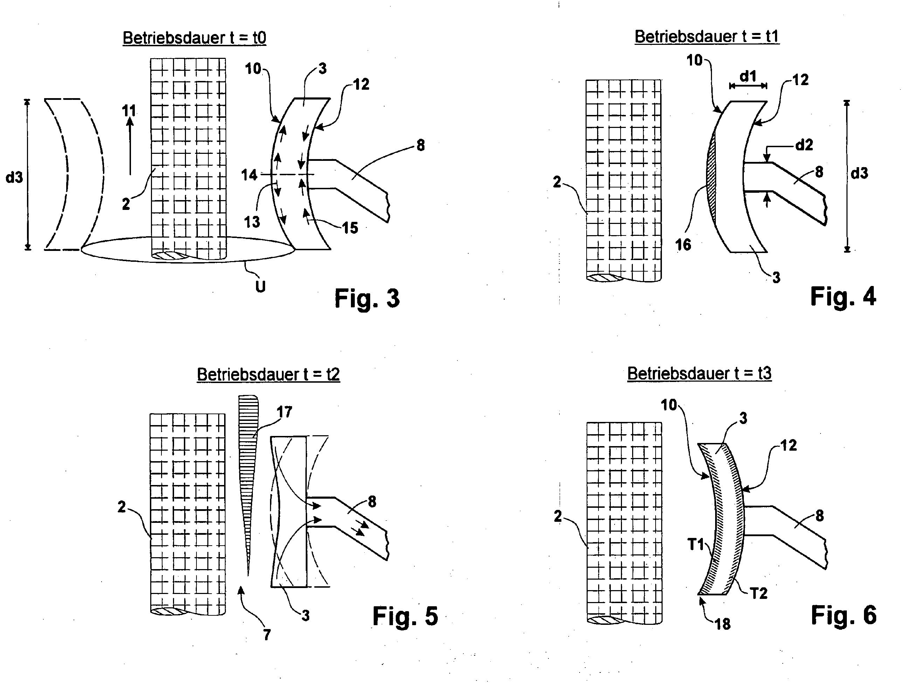

Die Figuren 3 bis 6 werden gemeinsam beschrieben, welche einen Ausschnitt der Figur 1 zu unterschiedlichen Zeitpunkten der Betriebsdauer zeigen. So zeigt die Figur 3 die Vorkammerzündkerze 1 im Ausgangszustand also nach einer Betriebsdauer t von null Betriebsstunden (t=t0). Die Figur 4 zeigt die Vorkammerzündkerze 1 nach einer Betriebsdauer t1, z. B. 4000 Betriebsstunden. Die Figur 5 zeigt die Vorkammerzündkerze 1 nach einer Betriebsdauer t2, z. B. 5000 Betriebsstunden, und die Figur 6 zeigt die Vorkammerzündkerze 1 nach einer Betriebsdauer t3, z. B. 6000 Betriebsstunden.

Entsprechend der Figur 3 hat die Massenelektrode 3 hat eine innere Umfangfläche 10, welche der Mittenelektrode 2 zugewandt ist. Gebildet wird die innere Umfangsfläche 10 aus einem Umfang U und einer Höhe d3. Wie dargestellt erstreckt sich die innere Umfangsfläche 10 daher in Längsrichtung 11 der Vorkammerzündkerze 1. Eine äußere Umfangsfläche 12 der Massenelektrode 3 liegt auf der Seite der Massenelektrode 3, welche der Mittenelektrode 2 abgewandt ist. Im Ausgangszustand zeigt die innere Umfangsfläche 10 einen konkaven Verlauf, während die äußere Umfangsfläche 12 einen konvexen Verlauf zeigt. Hergestellt werden die beiden gekrümmten Umfangsflächen, indem die Massenelektrode 3 an der äußeren Umfangsfläche 12 in den Halter 8 eingesetzt wird und danach die innere Umfangsfläche 10 und die äußere Umfangsfläche 12 gegen den Halter 8 gleichzeitig verpresst, also gezielt plastisch deformiert, werden. Durch die plastischen Deformation werden in der inneren Umfangsfläche 10 Zugspannungen 13 erzeugt, welche von einem Spannungsursprung 14 ausgehen. In der äußeren Umfangsfläche 12 werden hingegen Druckspannungen 15 erzeugt, die sich im Spannungsursprung 14 gegeneinander aufheben. In einem alternativen Herstellungsverfahren werden die beiden gekrümmten Umfangsflächen sowie die Zugund Druckspannung erzeugt, indem die Massenelektrode 3 mittels Kehlnaht mit dem Halter 8 verschweißt wird.

Wie in der Figur 4 dargestellt, ist auf der inneren Umfangsfläche 10 in einem schraffiert dargestellter Bereich 16 die Massenelektrode 3 bereits abgebrannt. Dieser Zustand tritt zum Zeitpunkt t1 auf. Durch den Abbrand verringert sich die Stärke d1 der Massenelektrode 3. Wird die Stärke der Massenelektrode 3 kleiner als eine kritische Stärke, so tritt ein erster Kompensationseffekt auf. Verursacht durch die zu geringe Stärke bewirken die Zugspannung 13 auf der inneren Umfangsfläche 10 und die Druckspannung 15 auf der äußeren Umfangsfläche 12 eine Rückstellung der Massenelektrode 3 in deren Ursprungsform vor der plastischen Verformung. Der erste Kompensationseffekt besteht also darin, dass bei sich vergrößerndem Abstand der beiden Elektroden, die Massenelektrode 3 sich selbstständig zurückstellt und dadurch den Abstand zur Mittenelektrode 2 wieder verkleinert. Der erste Kompensationseffekt endet dann, wenn die innere Umfangsfläche 10 der Massenelektrode 3 und die Umfangsfläche der Mittenelektrode 2 parallel zueinander verlaufen. Dieser Zustand ist in Figur 5 dargestellt, wobei der gestrichelt eingezeichnete Zustand der Darstellung der Figur 4 entspricht.

Zur Verlängerung der Lebensdauer der Vorkämmerzündkerze 1 sieht die Erfindung vor, dass die Übertrittsbohrungen 9 in der Vorkammerkappe 5 in der Art angeordnet und ausgerichtet sind, dass das komprimierte Gemisch 17 (Mittel-Jet) die Funkenstrecke 7 zwischen Mittenelektrode 2 und Massenelektrode 3 durchströmt. Da das komprimierte Gemisch ein Temperatur von etwa 200 °C hat, wird die innerer Umfangsfläche 10 der Massenelektrode 3 aufgeheizt. Über die Halter 8 entsteht eine Wärmeleistung von der Massenelektrode 3 zum Gehäuse 6. In der Figur 5 ist der Wärmestrom durch entsprechende Pfeile gekennzeichnet. Über die Dimensionierung der Massenelektrode 3 und des Halters 8 zueinander kann der Effekt erzielt werden, dass sich die Massenelektrode 3 auf der inneren Umfangsfläche 10 stark aufgeheizt und die Massenelektrode 3 auf der äußeren Umfangsfläche 12 weniger stark aufheizt. Bei Prüfstandsversuchen hat es sich gezeigt, dass der Effekt dann reproduzierbar auftritt, wenn das Verhältnis d2/d1 ≥ 1.846 und das Verhältnis d3/d2 ≥ 1.35 ist. Hierin entsprechen d1 der Dicke der Massenelektrode 3, d2 der Stärke des Halters 8 und d3 der Höhe der Massenelektrode 3. Siehe Figur 4. Der Temperaturunterschied innerer zu äußeren Umfangsfläche bewirkt wiederum, dass nunmehr die innere Umfangsfläche 10 der Massenelektrode 3 einen konvexen Verlauf annimmt und die äußere Umfangsfläche 12 einen konkaven Verlauf annimmt. Dieser Zustand ist in der Figur 6 dargestellt. Mit dem Bezugszeichen T1 ist die Temperatur auf der inneren Umfangsfläche 10 und mit T2 die Temperatur auf der äußeren Umfangsfläche 12 der Massenelektrode 3 gekennzeichnet, wobei gilt, dass die Temperatur T1 größer ist als die Temperatur T2 (T2>T1). Über die Ausrichtung der Übertrittsbohrungen 9 und der Dimensionierung der Massenelektrode 3 und Halter 8 wird also ein zweiter Kompensationseffekt bewirkt. Die Figur 6 zeigt die Vorkammerzündkerze, nachdem der zweite Kompensationseffekt bei einer Betriebsdauer t gleich t3 auftrat.

Der Abbrand setzt sich im Bereich der äußeren Kanten 18 der Massenelektrode 3 fort und führt zu einem Verrunden der Kanten 18 der Massenelektrode 3. Im weiteren Betrieb setzt sich der Abbrand in Richtung der Mittelachse der Massenelektrode fort. Infolgedessen bildet sich die innere Umfangsfläche 10 erneut parallel zur Mittelelektrode 2 aus. Der Ausgangspunkt ist wieder erreicht. Diese Abbrandverhalten setzt sich solange fort, bis im Bereich der Mittelachse der Massenelektrode 3 ein kritischer Durchmesser erreicht ist und die Massenelektrode 3 in sich zusammenfällt und der Mindest-Elektrodenabstand unterschritten wird oder die Massenelektrode 3 aus der Befestigung fällt.

### Bezugszeichen

- 1: Vorkammerzündkerze
- 2: Mittenelektrode
- 3: Massenelektrode
- 4: Vorkammerkappe
- 5: Vorkammer
- 6: Gehäuse
- 7: Funkenstrecke
- 8: Halter
- 9: Übertrittsbohrung
- 10: Innere Umfangsfläche
- 11: Längsrichtung
- 12: Äußere Umfangsfläche
- 13: Zugspannung
- 14: Spannungsursprung
- 15: Druckspannung
- 16: Bereich (Abbrand)
- 17: Komprimiertes Gemisch (Mittel-Jet)
- 18: Kante

## Patentansprüche

1. Vorkammerzündkerze (1) mit einer zentrischen Mittenelektrode (2), mit mindestens einer Massenelektrode (3), welche zur Mittenelektrode (2) in einem Abstand angeordnet ist, der eine Funkenstrecke (7) bildet, und mit zumindest einer Übertrittsbohrung (9) in einer Vorkammerkappe (4), wobei die Massenelektrode (3) eine innere Umfangsfläche (10) aufweist, welche der Mittenelektrode (2) zugewandt ist, und eine äußere Umfangsfläche (12) aufweist, welche der Mittenelektrode (2) abgewandt ist, **dadurch gekennzeichnet, dass** die innere Umfangsfläche (10) und die äußere Umfangsfläche (12) einen Abstand (d1) zueinander aufweisen, und
dass
in einem Ausgangszustand (t0), also nach einer Betriebsdauer von null Betriebsstunden,
die innere Umfangsfläche (10) in Längsrichtung (11) der Vorkammerzündkerze (1) unter Zugspannung (13) stehend einen konvexen Verlauf zeigt und die äußere Umfangsfläche (12) in Längsrichtung (11) der Vorkammerzündkerze (1) unter Druckspannung (15) stehend einen konkaven Verlauf zeigt,.
wobei durch Abbrand der Abstand (d1) zwischen der inneren Umfangsfläche (10) und der äußeren Umfangsfläche (12) verringerbar ist,
wobei bei Unterschreiten eines kritischen Abstands (d1) zwischen der inneren Umfangsfläche (10) und der äußeren Umfangsfläche (12) zu einem Zeitpunkt (t2), der nach dem Ausgangszustand (t0) liegt, die Zugspannungen (13) und die Druckspannungen (15) die Massenelektrode (3) so zurückstellen, dass die innere Umfangsfläche (10) der Massenelektrode (3) und die Umfangsfläche der Mittenelektrode (2) parallel zueinander verlaufen.

2. Vorkammerzündkerze (1) nach Anspruch 1,
**dadurch gekennzeichnet,**
**dass** die Massenelektrode (3) mittels Halter (8) am Gehäuse (6) der Vorkammerzündkerze (1) befestigt ist.

3. Vorkammerzündkerze (1) nach Anspruch 2,
**dadurch gekennzeichnet,**
**dass** die zumindest eine Übertrittsbohrung (9) in der Art angeordnet ist, dass komprimiertes Gemisch (17) die Funkenstrecke (7) zwischen Mittenelektrode (2) und Massenelektrode (3) durchströmt.

4. Verfahren zur Herstellung einer nach Anspruch 1 ausgeführten Vorkammerzündkerze (1),
**dadurch gekennzeichnet,**
**dass** in einem ersten Schritt die Massenelektrode (3) so in den Halter (8) eingesetzt wird, dass die äußere Umfangsfläche (12) am Halter (8) anliegt, in einem zweiten Schritt die Massenelektrode (3) auf der inneren Umfangsfläche (10) zur Ausbildung von Zugspannung (13) und auf der äußeren Umfangsfläche (12) zur Ausbildung von Druckspannung (15) gegen den Halter (8) verpresst wird und in einem dritten Schritt die Massenelektrode (3) und der Halter (8) am Gehäuse (6) der Vorkammerzündkerze (1) verschweißt werden.

5. Verfahren zur Herstellung einer nach Anspruch 1 ausgeführten Vorkammerzündkerze (1),
**dadurch gekennzeichnet,**
**dass** eine Massenelektrode (3) mittels Kehlnaht mit einem Halter (8) an der äußeren Umfangsfläche (12) verschweißt wird.

## Claims

1. Prechamber sparkplug (1) having a central electrode (2), having at least one earth electrode (3) which is arranged at a distance from the central electrode (2) and which forms a spark gap (7), and having at least one overflow bore (9) in a prechamber cap (4), wherein the mass electrode (3) has an inner circuferential face (10) which faces the central electrode (2), and an outer circumferential face (12) which faces away from the central electrode (2), **characterized in that** the inner circumferential face (10) and the outer circumferential face (12) are at a distance (d1) from one another, and
**in that**,
in an initial state (t0), that is to say after an operating period of zero operating hours,
the inner circumferential face (10) exhibits a convex profile under tensile stress (13) in the longitudinal direction (11) of the prechamber sparkplug (1), and the outer circumferential face (12) exhibits a concave profile under compressive stress (15) in the longitudinal direction (11) of the prechamber sparkplug (1),
wherein the distance (d1) between the inner circumferential face (10) and the outer circumferential face (12) can be reduced by burning off,
wherein when a critical distance (d1) between the inner circumferential face (10) and the outer circumferential face (12) is undershot at a time (t2) which is after the initial state (t0), the tensile stresses (13) and the compressive stresses (15) reset the earth electrode (3) in such a way that the inner circumferential face (10) of the earth electrode (3) and the circumferential face of the central electrode (2) run parallel to one another.

2. Prechamber sparkplug (1) according to Claim 1,
**characterized**
**in that** the earth electrode (3) is attached to the housing (6) of the prechamber sparkplug (1) by means of a mount (8).

3. Prechamber sparkplug (1) according to Claim 2,
**characterized**
**in that** the at least one overflow bore (9) is arranged in such a way that compressed mixture (17) flows through the spark gap (7) between the central electrode (2) and the earth electrode (3).

4. Method for manufacturing a prechamber sparkplug (1) embodied according to Claim 1,
**characterized**
**in that** in a first step the earth electrode (3) is inserted into the mount (8) in such a way that the outer circumferential face (12) bears on the mount (8), in a second step the earth electrode (3) is pressed against the mount (8) on the inner circumferential face (10) in order to form tensile stress (13) and on the outer circumferential face (12) in order to form compressive stress (15), and in a third step the earth electrode (3) and the mount (8) are welded to the housing (6) of the prechamber sparkplug (1).

5. Method for manufacturing a prechamber sparkplug (1) which is embodied according to Claim 1,
**characterized**
**in that** an earth electrode (3) is welded to a mount (8) on the outer circumferential face (12) by means of a fillet weld.

## Revendications

1. Bougie d'allumage à préchambre (1) comprenant une électrode centrale (2) placée au centre, avec au moins une électrode de masse (3) qui est disposée à distance par rapport à l'électrode centrale (2), qui forme un éclateur (7), et comprenant au moins un trou de passage (9) dans un capuchon de préchambre (4), l'électrode de masse (3) présentant une surface périphérique interne (10) qui est tournée vers l'électrode centrale (2) et présentant une surface périphérique externe (12) qui est tournée à l'opposé de l'électrode centrale (2), **caractérisée en ce que** la surface périphérique interne (10) et la surface périphérique externe (12) présentent une distance (d1) l'une par rapport à l'autre, et **en ce que** dans un état initial (t0), c'est-à-dire après une durée de fonctionnement de zéro heure de fonctionnement, la surface périphérique interne (10), dans la direction longitudinale (11) de la bougie d'allumage à préchambre (1), soumise à une tension de traction (13), présente une allure convexe et la surface périphérique externe (12), dans la direction longitudinale (11) de la bougie d'allumage à préchambre (1), soumise à une tension de compression (15), présente une allure concave, la distance (d1) entre la surface périphérique interne (10) et la surface périphérique externe (12) pouvant être réduite par combustion, et au passage en dessous d'une distance critique (d1) entre la surface périphérique interne (10) et la surface périphérique externe (12) à un instant (t2) après l'état initial (t0), les tensions de traction (13) et les tensions de compression (15) ramenant l'électrode de masse (3) de telle sorte que la surface périphérique interne (10) de l'électrode de masse (3) et la surface périphérique de l'électrode centrale (2) s'étendent parallèlement l'une à l'autre.

2. Bougie d'allumage à préchambre (1) selon la revendication 1, **caractérisée en ce que** l'électrode de masse (3) est fixée au moyen d' un élément de fixation (8) au boîtier (6) de la bougie d'allumage à préchambre (1).

3. Bougie d'allumage à préchambre (1) selon la revendication 2, **caractérisée en ce que** l'au moins un trou de passage (9) est disposé de telle sorte qu'un mélange comprimé (17) traverse l'éclateur (7) entre l'électrode centrale (2) et l'électrode de masse (3).

4. Procédé de fabrication d'une bougie d'allumage à préchambre (1) réalisée selon la revendication 1, **caractérisé en ce que** dans une première étape, l'électrode de masse (3) est insérée dans l'élément de fixation (8) de telle sorte que la surface périphérique externe (12) s'applique contre l'élément de fixation (8), dans une deuxième étape, l'électrode de masse (3) est pressée contre l'élément de fixation (8), sur la surface périphérique interne (10) pour réaliser une tension de traction (13) et sur la surface périphérique externe (12) pour réaliser une tension de compression (15), et dans une troisième étape, l'électrode de masse (3) et l'élément de fixation (8) sont soudés au boîtier (6) de la bougie d'allumage à préchambre (1).

5. Procédé de fabrication d'une bougie d'allumage à préchambre (1) réalisée selon la revendication 1, **caractérisé en ce qu'**une électrode de masse (3) est soudée au moyen d'une soudure d'angle avec un élément de fixation (8) à la surface périphérique externe (12).
